# EUROPEAN PATENT APPLICATION

(11) **EP 2 365 158 A1**
(43) Date of publication of application: **14.09.2011**
(21) Application number: 10156341.9
(22) Date of filing: 12.03.2010
(51) Int. Cl.: E04G 11/24

(54) **Apparatus for slipform casting**

(71) Applicant: Siemens Aktiengesellschaft, 80333 München (DE)
(72) Inventor: Stiesdal, Henrik, 5000, Odense C (DK)

(57) **Abstract**

Apparatus for slipform casting particularly of a moulded concrete structure comprising a slipform yoke having at least one pair of yoke legs in opposite disposal, at least one pair of form halves connected to the yoke legs between which form halves concrete is poured and at least one jack pipe interacting with the yoke, wherein the jack pipe is hollow.

## Description

The invention relates to an apparatus for slipform casting particularly of a moulded concrete structure comprising a slipform yoke having at least one pair of depending yoke legs in opposite disposal, at least one pair of form halves connected to the yoke legs between which form halves concrete is poured and at least one jack pipe interacting with the yoke legs.

The slipform technique for construction of in particular concrete structures uses form halves or form tunnels constituting the mould surfaces between which the concrete is continuously poured and shaped in the building of a wall or like structures. Form halves are synchronously moved or slid with the assistance of hydraulic or screw jacks for instance. As the forming of the structure progresses, the portion of previously poured concrete hardens and forms a support-like wall strong enough to withstand the concrete poured over the top of it. Likewise, essentially horizontal structures may be built. Pouring continues until the desired dimensions of the structure have been reached.

Said jacks are solid and spaced at substantially equal intervals to lift the form halves in gradual increments depending on the desired sliding speed. The rate of slide must be fast enough to prevent the hardened concrete from sticking to the form halves and smooth enough so as not to disturb the concrete already compacted but not yet hardened. In order for the jacks to lift the form halves, they rest on solid support anchors or pipes which are anchored to the already cast construction and are suitable to carry the jacks and form halves. Depending of the structure said support anchors may be extended as the construction carries on so as to finally reach the desired dimensions. A common slipforming system is disclosed in US 4,314,798 for example.

Generally, in moulded structures like wind turbine towers for instance, diverse channels for pre-stressing-wires and/or cable ducts or the like have to be integrated during the slipforming process. The channels may protrude entirely through the length or height of the moulded concrete structure. Additionally, the channels may be integrated in the structure as the slip forming process progresses.

US 4,095,326 relates to a method of post-stressing of concrete structures, wherein a tendon comprised of a plurality of elongated strands is formed by inserting elongated strands which will eventually form the tendon into a plurality of parking ducts and then withdrawing the plurality of strands simultaneously as a group from the parking ducts and into the duct of the structure to be post-stressed without fouling and jamming. Once in the ducts of the structure, the strands are anchored and post-tensioned as a tendon to develop a desired stress.

Even further separate channels in terms of electrical cable ducts for instance may be integrated in the concrete construction by inserting circular tubs during casting.

GB 888,275 depicts a concrete flooring element comprising one or more tubular ducts for inserting of electrical cable, whereby the flooring element is rebated at one or both ends where the ducts are readily accessible.

Hence, the incorporation of duct like structures i.e. channels or the like requires additional effort before or during the process of slipform casting of concrete structures.

Therefore, it is an object of the invention to provide an apparatus for slipform casting which is capable of easy integrating of duct-like structures or channels in concrete structures.

This is achieved by the above mentioned apparatus for slipform casting, wherein the jack pipe is hollow.

According to the invention, the jack pipe is hollow and consequently acts as duct-like structure, channel or the like after the concrete has set i.e. hardened itself. Hence, the integration of separate duct-like structures or the like during the slipform casting process is not required anymore, which gives rise to a facilitated construction and handling of the moulding process.

In accordance, diverse components of the structure to be built may readily be inserted in the hollow volume of the jack pipe and accordingly the hollow of the jack pipe constituting a free volume may be dimensioned to accommodate all relevant components of the structure like electric cables and/or pre-stress wires for instance. Hence, the dimensions of the inventive hollow jack pipes are adapted to accommodate or suit the amount and dimensions of cables and other components to be installed after the structure has been moulded.

The length of the free volume within jack pipe may vary. There is no need for "parallel lines" i.e. ducts for wireless/electrical cables and support pipes for the slipforming process. It is also possible, that the inner section of a jack pipe comprises more than one hollow opening, anyhow it is assured, that the mechanical stability of the jack pipe is still guaranteed.

The invention gives rise to a reduction of costs as well as no additional duct-like structures or support pipes for example are necessary anymore. The inventive apparatus may be used for slipform casting in either horizontal or vertical direction, i.e. for road building which is essentially horizontal or building of vertical high concrete structures for example.

Since the jack pipes are completely hollow, cables or pre-stress wires or the like of great length may be inserted and accommodated within the free volume of the jack pipes. The inserted components may exceed the length of the jack pipe.

In exceptional cases the jack pipe may only be partially hollow. Such jack pipes may be disposed at an initial point. Cables or the like end in such formed jack pipes.

A jack pipe may advantageously comprise at least one connecting member for connecting the jack pipe with further jack pipes. Hence, at least two jack pipes may be added together giving rise to an elongation of the hollow inside the jack pipes as the hollow of each jack pipe favourably communicates with the hollow of the jack pipe connected in up- or downstream. In such a manner, long hollows may be built in vertical or horizontal direction. Accordingly, notable, particularly long components may be accommodated within the jack pipes.

The connecting member of a first jack pipe may provide a snap-fit connection with a connecting member of a further jack pipe. Snap-fit connections are known and represent a mechanical joint system where part-to-part-attachment is accomplished with locating and locking features corresponding with one or the other of the components being joined. Joining requires the (flexible) locking features to move the side for engagement with a corresponding mating part, followed by return of the locking feature toward its original position. Located features are inflexible, providing strength and stability in the attachment.

Consequently, in this embodiment the connecting member may either be a snap-fit or the like or a recess or the like adapted to receive a snap-fit. All shapes of snap-fits and corresponding recesses are possible. Of course, the snap-fits may be inclined thereby facilitating connecting the jack pipes. The snap-fit connection may be detachable or non-detachable. The connecting member i.e. the snap-fit and the corresponding recess may be provided at diverse positions along the jack pipe.

Alternatively or additionally, the connecting member of a first jack pipe may provide a plug-connection with a connecting member of further jack pipes. Plug-connections give rise to fast and easy connecting of jack pipes. The plug-connection may be detachable or non-detachable. The connecting member is favourably either are groove-like recess or a tongue-like protrusion and disposed at the free ends of the jack pipe. Advantageously, a jack pipe comprises both groove-like recess and tongue-like protrusion disposed at opposing ends.

Alternatively or additionally, one end of the jack pipe may have an increased diameter. Thus, a ready connection of jack pipes is achievable by solely plugging one end with increased diameter over an end of another jack pipe with normal, i.e. not increased diameter. It is possible, that a jack pipe has both of its ends increased in diameter or only one end. In the former case a jack pipe is connectable with one or two jack pipes having no increased diameters regarding their ends, in the latter case a jack pipe is connectable with similar jack pipes, whereby a connection is established by plugging one end with not increased diameter in an end with increased diameter.

Alternatively or additionally, the jack pipe is connectable with further jack pipes by means of separate connecting sleeves having at least one connecting portion for connecting the jack pipe with further jack pipes. The connecting sleeves act as adapter-like members giving rise to an easy and rapid connection of two or more jack pipes. The connecting sleeve is attached to an end of a jack pipe by means of its connecting portion, which connecting portion is able to accommodate a further jack pipe, which jack pipe if need be may host another connecting sleeve and so on. In favour, the connecting sleeve comprises two connecting portions disposed at opposite ends of the connecting sleeve. The connecting sleeve is hollow as well, i.e. cables or the like may be conducted through the inner of the connecting sleeve.

The connecting portion may provide a snap-fit-connection and/or provide a plug connection. Accordingly, the connecting portions of the connecting sleeves are preferably adapted as a snap-fit which may readily be attached to a jack pipe by snapping in the hollow of the jack pipe and/or a plug-connection which is attainable by shaping the connecting portions in a L- or U-shape for accommodating the end of a jack pipe for instance. Of course, the L- or U-shape has a greater diameter than the diameter of a jack pipe.

Increasing the diameter towards the end portions of a connecting sleeve also allows a fast and easy connection of jack pipes by plugging the connecting sleeve whose ends have a greater diameter than the jack pipe to the jack pipe.

Preferably, at least one means for moving one form halve in a direction perpendicular to the surface of the form halves is provided. The means are provided favourably on a i.e. in connection with the yoke legs and the form halves. The position of the supporting form halves in relation to the cast concrete can be varied in a direction substantially perpendicular or normal to the casting direction. The means may be pneumatically, hydraulically or electro-engine driven operated cylinders for example. The means are arranged in a way that the pressure of the form halves against the cast concrete, that is the pressure on the formwork, can be continuously varied or entirely relieved.

The invention also relates to a moulded concrete structure, especially a wind turbine tower, moulded with the above mentioned apparatus for slipform casting.

Finally the invention relates to the use of the above mentioned apparatus for slipform casting for moulding a wind turbine tower.

In the following the invention is described in detail as reference is made to the figures, whereby
- fig. 1: shows a principle view of an inventive apparatus for slipform casting;
- fig. 2: shows a first embodiment of an inventive jack pipe;
- fig. 3: shows a second embodiment of an inventive jack pipe;
- fig. 4: shows a third embodiment of an inventive jack pipe;
- fig. 5: shows a first embodiment of a connection of jack pipes by means of connecting sleeves;
- fig. 6: shows a second embodiment of a connection of jack pipes by means of connecting sleeves; and
- fig. 7: shows a third embodiment of a connection of jack pipes by means of connecting sleeves.

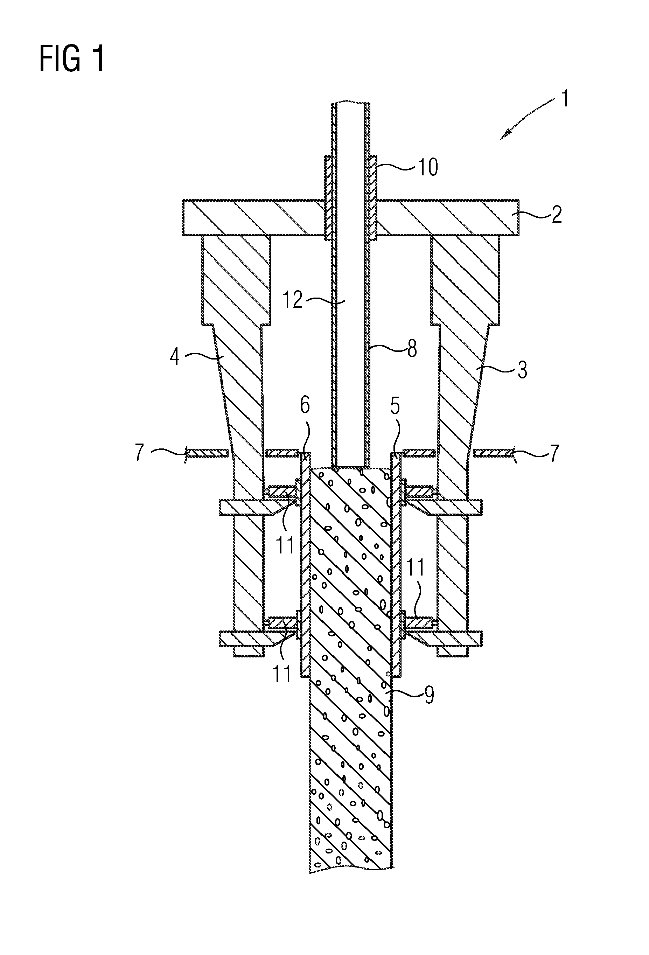

Fig. 1 shows a principle view of an inventive apparatus 1 for slipform casting. The apparatus 1 comprises a slipform yoke 2, which is disposed on two opposing yoke legs 3, 4. Each yoke leg 3, 4 is adapted to carry a form halve 5, 6, whereby the inner surfaces of the form halves 5, 6 face each other. It is also possible, that the form halves 5, 6 besides being carried by the yoke legs 3, 4 may be carried by stays (not shown) between a working deck 7 and the yoke legs 3, 4. Concrete or like material is intended to be poured between the form halves 5, 6. A vertical jack pipe 8 is inserted in an already cast vertical wall portion 9 of the concrete structure like a wind turbine tower, which is to be moulded, intending to project upwards through the slipform yoke 2. A jack 10 or the like is connected to the slipform yoke 2 and is provided to act as lifting means for the slipform by means of the jack pipe 8. Consequently, the jack pipe 8 interacts with the jack 10 in terms of lifting the apparatus 1 in an upward direction. If need be, appropriate threads are provided outside the jack pipe 8 mating with threads disposed inside the jack 10.

According to fig. 1 a vertical structure like a wind turbine tower is to be cast, consequently the yoke 2 is substantially horizontal, the yoke legs 3, 4 are substantially vertical, respectively. Likewise, for structures to be cast in a certain angle with a horizontal plane, all details in applicable cases will assume a corresponding inclination. The same applies to horizontal structures.

Means 11 for moving one or both form halve(s) 5, 6 in a direction perpendicular to the surface of the form halves 5, 6 is provided at the yoke legs 3, 4. The means 11 may be continuously driven by an electric motor, for example.

The process of slipform casting of concrete structures is widely used and needs no further explanation.

Not shown as not necessary according to the invention are usually used separate duct-like structures integrated or accommodated within the cast vertical wall portion 9, which are employed to accommodate components like electric cables, pre-stress wires or the like. This is possible, as the inventive jack pipe 8 is not solid but at least partially hollow i.e. establishes a volume (hollow 12) inside and is consequently adapted to accommodate all relevant components like the already mentioned electric-cables or pre-stress wires for example.

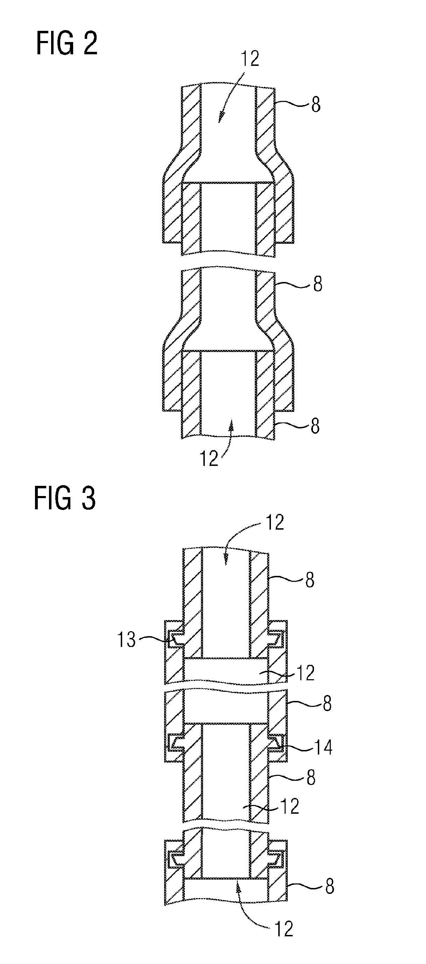

Fig. 2 shows a first embodiment of an inventive jack pipe 8. It is discernible, that a jack pipe 8 has one end (here the lower end of the jack pipes with reference to fig. 2) with increased diameter and thus may be connected to further jack pipes 8. As a result, it is possible to obtain an easy and stable connection of several jack pipes 8 by solely plugging one jack pipe 8 to a jack pipe 8 disposed downstream. Of course, the connection is leak-proof, so that no concrete may pour inside the jack pipes 8. That is, according to fig. 2 the jack pipe 8 in the middle was plugged with its end with increased diameter to the free ending of the jack pipe 8 disposed below. Further, it is discernible, that the inventive jack pipe 8 may be completely hollow as well, whereby the hollows 12 of the jack pipes 8 communicate with one another and give rise to the integration of cables through the entire structure to be cast if desired.

With reference to fig. 3, it is also possible that connecting members in the shape of snap-fits 13 and corresponding recesses 14 are provided at the jack pipes 8. According to fig. 3 a first type of jack pipe 8 is equipped with snap-fits 13 and a second type of jack pipe 8 is only equipped with recesses 14. As can be seen, snap-fits 13 are provided with an inclination at their endings giving rise to an easy obtainable connection between the jack pipes 8. Anyhow and not shown is it also possible that each jack pipe 8 comprises a snap-fit 13 at one end and/or recesses 14 at its opposing ends.

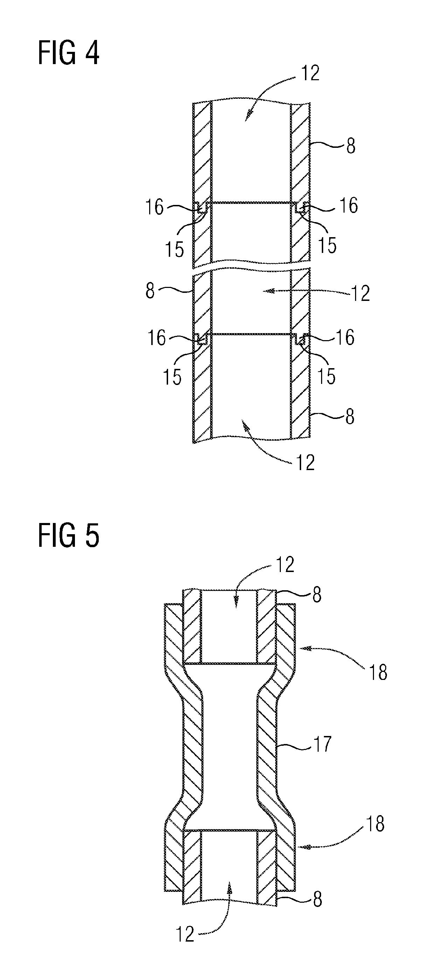

Fig. 4 shows a third embodiment of the inventive jack pipe 8. Again, three exemplary jack pipes 8 are connected by use of connecting members which are in comparison to fig. 2 groove-like recesses 15 accommodating according tongue-like protrusions 16 giving rise to an easy obtainable, detachable plug-connection of several jack pipes 8. Each jack pipe 8 is provided with a tongue-like protrusion 16 at one end and a groove-like recess 15 at the opposing end. Anyhow, it is possible to provide a jack pipe 8 only with groove-like protrusions 16 and connecting it with another jack pipe having only groove-like recesses 15.

An inventive jack pipe 8 is preferably made of metal material like iron or iron alloys or maybe also made of advanced materials as composite materials on base of carbon or glass fibre for instance.

Of course, it is possible to provide different connecting members at a jack pipe 8. The cross section of a jack pipe 8 has favourably a round or rectangular shape but is not limited to.

Fig. 5 shows a first embodiment of a connection of jack pipes 8 by means of connecting sleeves 17. The given connecting sleeve 17 has an increased diameter towards both of its ends acting as connecting portion 18. Hence, an easy connection of two or more jack pipes 8 is achievable by attaching, i.e. plugging, a connecting sleeve 17 to an end of a jack pipe 8 and attaching a further jack pipe 8 to the other end of the connecting sleeve 17. If need be, the connection is also easily detachable.

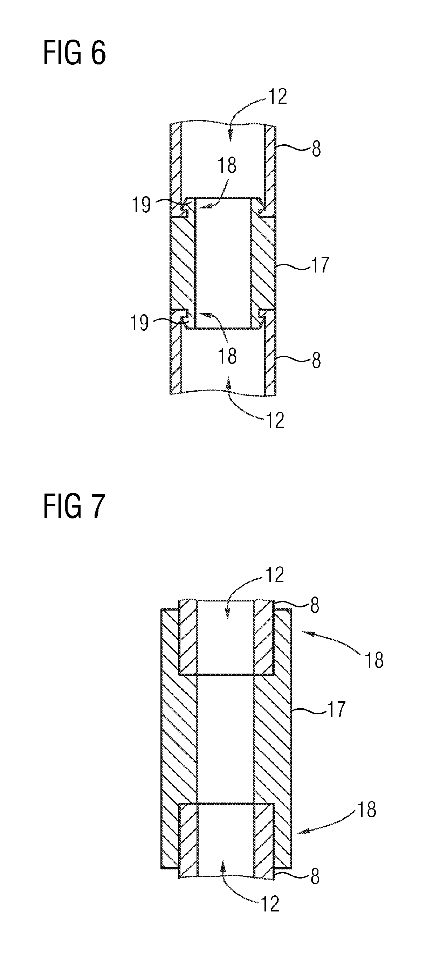

Fig. 6 shows a second embodiment of a connection of jack pipes 8 by means of connecting sleeves 17. In this embodiment snap-fits 19 are provided at the ends of the connecting sleeve 17 acting as connecting portions 18. Hence, a connection may be established by attaching i.e. pushing the connecting sleeve 17, i.e. its snap-fits 19 into the ends of jack pipe 8.

Fig. 7 shows a third embodiment of a connection of jack pipes 8 by means of connecting sleeves 17. According to this embodiment, the connecting portions 18 of the connecting sleeves 17 are adapted as a cross-sectional L-shaped section at the endings of the connecting sleeve 17. The connecting portion 18,thus, is built for accommodating the jack pipe 8. The connecting sleeves 17 are preferably integrally formed components made of metal or polymer (plastic) material. Preferably they are made of the same material as the jack pipes.

## Claims

1. Apparatus for slipform casting particularly of a moulded concrete structure comprising a slipform yoke having at least one pair of yoke legs in opposite disposal, at least one pair of form halves connected to the yoke legs between which form halves concrete is poured and at least one jack pipe interacting with the yoke, wherein the jack pipe is hollow.

2. Apparatus according to claim 1, wherein the jack pipe comprises at least one connecting member for connecting the jack pipe with further jack pipes.

3. Apparatus according to claim 1 or 2, wherein the connecting member of a first jack pipe provides a snap-fit connection with a connecting member of a further jack pipe.

4. Apparatus according to claim 3, wherein the connecting member is either a snap-fit or a recess adapted to receive a snap-fit.

5. Apparatus according to one of the preceding claims, wherein the connecting member of a first jack pipe provides a plug connection with a connecting member of a further jack pipe.

6. Apparatus according to claim 5 wherein the connecting member is either a groove-like recess or a tongue-like protrusion.

7. Apparatus according to one of the preceding claims, wherein one end of a jack pipe has an increased diameter.

8. Apparatus according to one of the preceding claims, wherein the jack pipe is connectable with further jack pipes by means of separate connecting sleeves having at least one connecting portion for connecting the jack pipe with further jack pipes.

9. Apparatus according to claim 9, wherein the connecting portion provides a snap-fit connection and/or provides a plug-connection.

10. Apparatus according to claim 8 or 9, wherein the connecting sleeve has at least one end with increased diameter.

11. Apparatus according to one of the preceding claims, wherein at least one means for moving one form halve in a direction perpendicular to the surface of the form halves is provided.

12. Apparatus according to claim 11, wherein the means is provided on a yoke leg.

13. Concrete structure, especially wind turbine tower, moulded with the apparatus for slipforming according to one of the claims 1 to 12.

14. Use of the apparatus for slipforming according to one of the claims 1 to 12 for moulding a wind turbine tower.
